# EUROPEAN PATENT APPLICATION

(11) **EP 2 402 859 A1**
(43) Date of publication of application: **04.01.2012**
(21) Application number: 10305728.7
(22) Date of filing: 02.07.2010
(51) Int. Cl.: G06F 9/48

(54) **Die and package comprising a plurality of dies**

(71) Applicant: STMicroelectronics (Grenoble 2) SAS, 38000 Grenoble (FR)
(72) Inventor: Urzi, Ignazio Antonino, 38000 Grenoble (FR); D'Audigier, Philippe, 38000 Grenoble (FR)
(74) Representative: Style, Kelda Camilla Karen

(57) **Abstract**

A die comprises a controller configured to select at least one task to be performed on said die and signal circuitry configured in response to the selection of said at least one task to provide a signal to be sent to a second die for initiating performance of said selected at least one task on said second die. The die also has task circuitry configured in response to said signal to cause said selected at least one task to be performed.

## Description

The present invention relates to a die and a package comprising a plurality of dies.

It has been proposed by the Applicant to provide a plurality of integrated circuit dies incorporated within a single package. In such an environment, the execution of tasks in a plurality of integrated circuit dies within the single package may need to synchronised.

According to an aspect, there is provided a die comprising: a controller configured to select at least one task to be performed on said die; signal circuitry configured in response to the selection of said at least one task to provide a signal to be sent to a second die to initiate performance of said selected at least one task on said second die; and task circuitry configured in response to said signal to cause said selected at least one task to be performed.

According to an aspect, there is provided a die comprising: a controller configured to select at least one task to be performed on said die; an output configured in use to be connected to a second die; signal circuitry configured in response to the selection of said at least one task to provide a signal to said output, for initiating performance of said selected at least one task on said second die; and task circuitry configured in response to said signal to cause said selected at least one task to be performed

According to another aspect, there is provided a die comprising; a register comprising a plurality of entries, each entry corresponding to a task which is to be time coordinated with a task on a second die; a controller configured to set at least one entry of said register and to cause at least one corresponding entry in a register on a second die to be set; synchronisation circuitry configured, in response to said at least one entry being set to cause a synchronisation signal to be sent to said second die; and task circuitry, configured in response to said at least one entry being set to cause said task corresponding to said entry to be performed.

The synchronisation circuitry may comprise a logic gate.

The controller may be configured to determine an order for a plurality of tasks to be performed.

According to another aspect, there is provided a die comprising: an input configured to receive a task selecting signal from a first die selecting at least one task to be performed on said die; an input configured to receive a task initiating signal from the first die; and task circuitry configured in response to said at least one task being selected and receipt of said task initiating signal to cause said at least one task to be performed.

According to another aspect, there is provided a die comprising: a register comprising a plurality of entries, each entry corresponding to a task which is to be time coordinated with a task on a first die; an input configured to receive a control signal, said control signal configured to set at least one entry of said register; a input configured to receive a synchronisation signal from said first die; and task circuitry, configured in response to said at least one entry being set and the receipt of the synchronisation signal to cause said task corresponding to said entry to be performed.

The control circuitry may comprise a logic gate.

Some embodiments of the present invention will now be described by way of example only to the accompanying Figures in which:
Figure 1 shows a schematic view of two dies; and
Figure 2 shows an example of synchronised tasks being performed in two dies.

In some embodiments of the present invention, a plurality of integrated circuit dies is incorporated within a single package. In the following examples, a single package having two dies is described. However, it should be appreciated that this is by way of example only and more than two dies may be provided in some embodiments of the invention.

When two or more dies are provided in a single package, it may be required to synchronise the execution of tasks in the two dies. For example, different areas of the system on chip SoC provided by the single package may require timing coordination.

One example of timing coordination is synchronisation. For example, two tasks on two dies need to take place at substantially the same time. For example, one or more of the following tasks may require timing coordination such as synchronisation: clock recovery; clock synchronisation; security task; fast inter-die mail boxes, or the like. These are only a few examples of tasks which need to be synchronised or have some other predefined timing relationship. Another example of timing coordination is where one task on one die needs to take place before or after another task on the other die. In some embodiments, the two tasks may have to be performed within a given time frame, which may be relatively small.

In some embodiments, the timing control of the tasks is provided by software as will be discussed later.

In general, known solutions to address synchronisation issues tend to use a time multiplexing approach. Time multiplexing might not be suitable for addressing the requirements of a system built using a plurality of dies in a single package architecture particularly where there may be no predefined order of execution for a plurality of tasks.

Some embodiments of the present of the present invention may be backwardly compatible with existing hardware time multiplexing solutions. As will be discussed, the control of the order in which tasks are performed by may be provided by software. The software program can be arranged to emulate the ordering of a time multiplexing approach if required. Thus, with some embodiments of the present invention, it may be possible to achieve similar results to hardware time multiplexing solutions using software in order to synchronise sequential tasks in a given order.

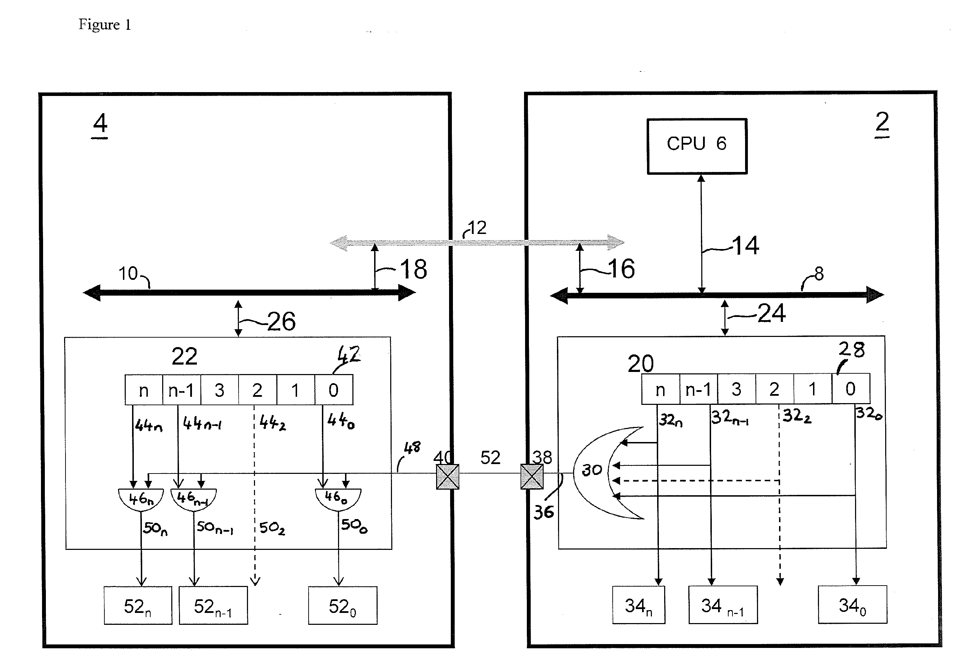

Reference is made to Figure 1 which shows a first die 2 and a second die 4. The first die 2 is coupled to the second die 4 via an inter-die link 12 or the like. The first die 2 has a host CPU (Central Processing Unit) 6. The host CPU 6 is arranged to be coupled, via connection 14, to an interconnect bus 8 of the first die 2. A connection or other link 16 is provided between the interconnect bus 8 of the first die 2 and the inter-die link 12.

The first die 2 is provided with synchronisation circuitry 20. The synchronisation circuitry 20 is coupled to the interconnect bus 8 via link or connection 24. The synchronisation circuitry 20 comprises a register 28 and signal circuitry. The synchronisation register 28 has n+1 bits, each of the bits being associated with a particular task. In the example shown, the synchronisation register 28 has bits associated with tasks 0 to n.

A respective output 32₀-32ₙ is associated with each bit of the register 28. The respective outputs 32₀-32ₙ are each provided to a respective input of an OR gate 30. Further each of the outputs 32₀-32ₙ is provided to respective task circuitry 34₀₋ₙ. Thus, bit k is associated with task k. For example task circuitry 34ₙ₋₁ is associated with task n-1 and is associated with bit n-1 of the register 28.

The output 36 of the OR gate 30 is provided to an output pad 38 of the first die 2. The output pad 38 of the first die 2 is linked via interconnect 52 to an input pad 40 of the second die 4. It should be appreciated that in one preferred embodiment of the invention, the connection between the pads comprises a single connection such as a single wire or the like. As will be discussed later, this single link can be used to synchronise one, two or more tasks on the two dies.

The second die 4 has an interconnect bus 10 which is coupled via a connection or link 18 to the inter-die link 12. The interconnect bus 10 of the second die 4 is coupled via connection 26 to synchronisation circuitry 22. The synchronisation circuitry 22 on the second die 4 comprises a register 42 and signal circuitry. This register has a bit corresponding to each bit in the register 28 on the first die 2. In particular, there is a 1 to 1 correspondence between the bits of the register in the first die 2 and the bits in the register 42 on the second die 4. In other words, bit k of the register 28 on the first die 2 corresponds to bit k of the register 42 on the second die 4. Some alternative embodiments may have a more complex mapping between the registers. Each bit of the register 42 provides a respective output 44₀-44ₙ. Each output 44₀-44ₙ is coupled to a respective AND gate 46₀-46ₙ. Each of the AND gates 46 is arranged to receive a same synchronisation signal as a second input. The synchronisation signal is the synchronisation signal received from input pad 40 and provided as the respective second inputs via a link or connection 48.

Each AND gate provides a respective output 50₀-50ₙ. Each of the respective outputs 50₀-50ₙ is provided to respective task circuitry 52₀-52ₙ. The task circuitry 52₀-52ₙ of the second die also has a one-to-one correspondence with the task circuitry of the first die 2. Accordingly, task circuitry 34 ₙ₋₁ associated with task n-1 on the first die 2 corresponds to the circuitry S2ₙ₋₁ for performing task n-1 on the second die 4. However, some alternative embodiments of the invention may provide a more complex mapping between the task circuitry on the two dies.

In some embodiments of the present invention, the configuration registers 28 and 42 are controlled by the software running on the host CPU 6 in the first die 2. The register 42 in the second die 4 is programmed by the host CPU 6. In particular, the host CPU 6 is arranged to write data into the register 42. This occurs by the host CPU accessing the register 42 on the second die, using the respective buses on each die and the inter-die link 12. It should be appreciated that the software which controls the synchronisation can be provided on either of the two dies. In some embodiments of the present invention, the synchronisation control may be split across the two dies. For example, the host CPU on one die may control some tasks and the host CPU on the other die may control other tasks.

In one embodiment of the present invention, the size of the registers will depend on the number of inter-die tasks which need to be synchronised. For example, if 10 tasks need to be synchronised, then each register will comprise 10 bits. It is of course possible to have registers which are programmable and accordingly, some of the bits may be unused. The registers may support any suitable number of tasks. Typically, the number of tasks may be between 2 and 50. However, this is by way of example only and some embodiments may support more than 50 tasks. The registers may have, in some embodiments of the invention, two or more bits associated with a given task.

The operation of the circuitry shown in Figure 1 will now be described. In the following example, it is assumed that task 0 and task n-1 on the first die 2 need to be synchronised with the respective tasks on the second die 4. The host CPU sends a WRITE signal to the second die 4 via the path defined by connection 14, the interconnect bus 8, connection 16, the inter-die link 12, connection 18, interconnect bus 10 and connection 26. The WRITE signal writes a "1" into the bit for task 0 and into the bit for task n-1, in the register 42. As far as the host CPU 6 is concerned, although the register 42 on the second die 4 is on a different die to the host CPU 6, the host CPU 6 nevertheless considers the register 42 as address space which can be addressed by the host CPU 6. If the host CPU 6 needs to verify that the required bits have been written into the register 42 of the second die 4, the host CPU 6 may read the respective bits of the registers. However, this read action may be omitted in some embodiments of the invention.

The host CPU 6 then writes via the path comprising connection 14, interconnect bus 8 and connection 24 a "1" to the corresponding bits for task 0 and task n-1 of the register 28 of the first die 2. When this occurs, a "1" is then provided on the output 32₀ and 32ₙ₋₁. This causes the circuitry 34₀ for task 0 and the circuitry 34ₙ₋₁ for task n-1 to be initiated and also causes the OR gate 30 to provide a "1" output. This "1" output is passed from the output pad 38 to the input pad 40 and is then input to each of the AND gates. Those AND gates which already have a "1" as an input from the register bits which are set to one will provide a "1" output. In this example, those AND gates associated with task 0 and n-1 will provide the "1" output. Those AND gates which have a "1" output cause the circuitry S2ₙ₋₁ and 52₀ corresponding to tasks 0 and n-1 to be initiated.

As the signal circuitry is quite simple, the corresponding task circuitry is initiated on the second die at substantially the same time as on the first die or only with a relatively small time difference. In some alternative embodiments of the present invention, a delay may be provided for example in the form of two inverters on the first die to provide some compensation for the time taken for the synchronization signal to be propagated through the OR and AND gates. In practice this delay through the gates may be quite small and may be ignored in some cases. Alternatively or additionally, delay circuitry may be provided on the first die to compensate for the delay caused by the signal passing through the two pads.

In some of the described embodiments, the synchronisation signal has been described as being in the form of "1" or so-called high signal. It is of course possible to have a synchronisation signal in a form of a "0" or so-called low signal. Likewise, the bits have been described as being set to "1" in the registers in order to initiate the synchronisation task. It is of course possible in alternative embodiments of the present invention to set a bit to "0" in the registers in order to initiate the respective tasks. The synchronisation signal may be more complex in some embodiments requiring two or more parallel bits and/or two or more serial bits. The synchronisation signal may be encoded with other data in alternative embodiments.

The register in the first die 2, that is the die that has the host CPU 6, is referred to as the tasks selection configuration register. A bit may be provided in each register for each task which requires synchronisation in the two dies. One or more of these tasks can be executed at the same time.

In one embodiment of the present invention, a given bit of this register 28 in the first die 2 is set only after the equivalent bit in the register 42 in the second die 4 has been set. However, in some alternative embodiments, the two bits may be set more or less at the same time or the bits of the register 28 on the first die may be set first. This may require in some embodiments that one or other of the registers is first cleared (for example the bit value is "0") before the respective bit is set, (for example to "1").

The register on the second die 4 may be referred to as tasks mask selection configuration register. This register is configured to route the synchronisation signal which is driven by the first die to the selected task circuitry.

It should be appreciated that in some embodiments of the present invention, the number of inter-die pins can be minimised. In one embodiment, one pad is used on each die for the synchronisation signal. This may, for some embodiments, provide a low cost implementation. It should be appreciated that in some alternative embodiments of the present invention, more than one pad may be provided on each die for the connection. In another embodiment of the invention, the pads on the two dies may be shared with other circuitry or functions. The connection 52 may be a dedicated connection for the synchronisation signal or may be shared, for example with the inter-die link. This may for example require some multiplexing circuitry.

Some embodiments of the present invention may have no predefined order for the task synchronisation. For example, the software on the host CPU may want to perform the task 3 followed by task 1 or indeed any other order. Some embodiments of the present invention mean that the order of the tasks synchronisation can be controlled in dependence on one or more events and/or the context. For example, the host CPU may decide to follow a certain order for the synchronisation of a number of tasks depending on a given event/context or multiple events. By way of example only, the event or context may comprise external or internal interrupts or the like.

Some embodiments of the present invention may be arranged such that there is no fixed delay between the synchronisation of each task. This means that task synchronisation which is dependent on irregular or not predictable events can be accommodated.

Some embodiments of the present invention can be performed by a relatively simple software routine running on the host CPU.

Some embodiments of the present invention may have relatively small timing uncertainty. In particular, the timing uncertainty between the synchronisation signal seen by the two tasks on the two different dies may be relatively small, for example of the order of +/-20ns. This may be achieved in some embodiments of the present invention by the simplicity of the arrangement.

In some embodiments a single logic gate, for example an OR gate is used to generate the synchronisation signal. Additionally or alternatively a single logic gate, for example an AND gate, is used to generate a control signal to initiate the task circuitry on the second die. The AND gate may be considered to be a control circuit for a respective task circuit. Of course alternative logic gates may be used in alternative embodiments of the invention. Other types of circuit arrangement may be used in some embodiments.

Some embodiments of the present invention may maximise efficiency in that a relatively large number of tasks can be served using a unique instance of the same synchronisation module. Thus it may be possible for the same synchronisation signal to be used for more than one task if a different task requires synchronisation at the same time. Alternatively, a single task can be synchronised at a time.

It should be appreciated that the controller is configured to write a "0" to the respective registers when the controller considers the tasks to have been performed. This may be after a given time period or may be responsive to signal or the like being detected by the controller.

In one embodiment, each entry of the register is arranged to be associated with allocated one of the tasks. In an alternative embodiment, the entries of the register can be programmed to be associated with different ones of the tasks.

In one embodiment, separate task circuitry is provided for each entry in the register. In some alternative embodiments of the invention, one or more of the task circuitry may be associated with a plurality of said entries.

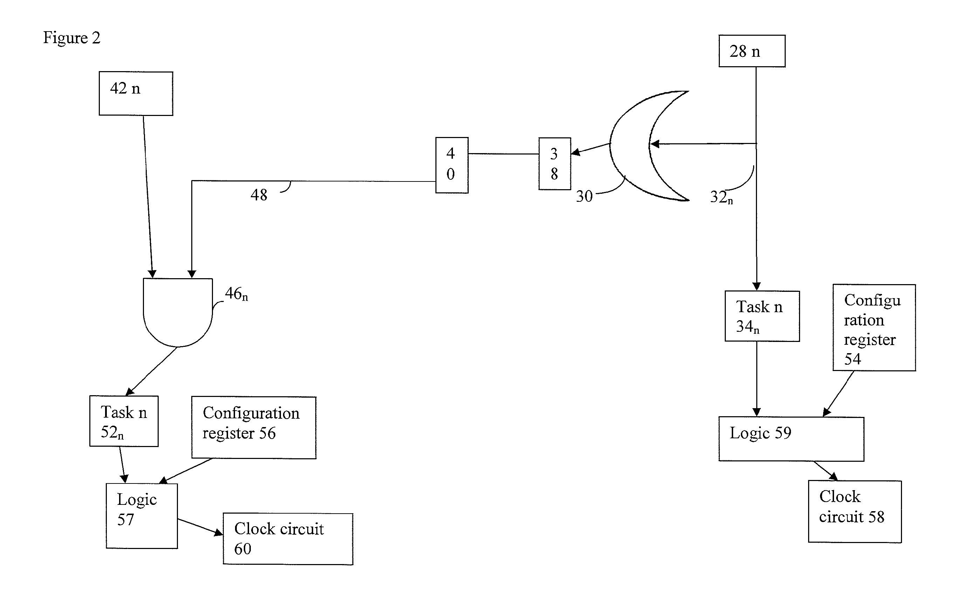

Reference is made to Figure 2 which shows an example of one task which is synchronised in each of the two dies 2 and 4. In particular, the arrangement of Figure 2 allows for the drift, compared to a third clock source (not shown), of two clocks generated locally on each die by the same instance of a clock generator. The arrangement of Figure 2 allows the correction to be applied at the same time to both clock generators on each die. Thus circuitry provided in both dies allows the CPU to measure the drift and to apply the correction to both clock generators. Thus Figure 2 shows a schematic illustration of a synchronisation of the clock generators on the two dies is shown. This task is task n. Bit n of the register 42 on the second die 4 is set, that is has a "1" written into the location of the register associated with task n. This causes one of the inputs for the AND gate 46ₙ to go high ("1").

Bit n of the register 28 of the first die 2 is likewise set. The writing of the "1" into the register 28 for bit associated with task n causes the synchronisation signal to be output by the OR gate 30. This synchronisation signal is input to the second input of the AND gate 46ₙ which causes the output of AND gate 46ₙ to go high.

On the second die, the output of the task circuitry 52ₙ is input to logic 57 which also receives the output of a configuration register 56. Likewise on the first die, the output of the task circuitry 34ₙ is input to logic 59 which also receives the output of a configuration register 56. Accordingly, the circuitry 34ₙ and 52ₙ associated with task n are respectively activated on the first die and the second die. In each case, the task circuitry 34ₙ and 52ₙ respectively provide a high output to the respective logic 57 and 59. This causes clock correction information from the respective configuration register 54 and 56 which is also applied to the logic 57 and 59 to be received by respective clock generation circuitry 58 and 60. The correction can then be applied to the respective clock generators of the of the two dies. In this way the two clocks on the two dies are brought back into synchronisation.

In the absence of the activation signal from the task circuitry, no clock correction is applied to the clock circuitry.

It should be appreciated that Figure 2 is by way of example only and the task circuitry may be configured in some alternative embodiments to directly perform the task or to cause the task to be performed.

The registers described above may be replaced by any other suitable memory or data storage.

It should be appreciated that the task circuitry and/or the signal circuitry may take the form of hardware, software or a combination thereof.

In one embodiment of the present invention, the configuration registers may for example be part of the task circuitry. Additionally or alternatively, the task circuitry may be part of the circuitry which actually performs the task.

It should be appreciated that the task which is synchronised and shown in Figure 2 is by way of example only. Alternative embodiments of the present invention may be used to additionally or alternatively synchronise any other suitable task.

Some embodiments described have various connections. It should be appreciated that these connections may be direct or indirect. The connections may be provided by wired connection or the like or in alternative embodiments via a suitable coupling arrangement.

Some embodiments of the present invention may be used with any two or more different die.

By way of example only, by allowing more than one die within a single package, decoupling of analogue blocks from the digital blocks may be achieved. For example, the analogue circuitry can be provided on one die and the digital circuitry can be provided on a different die. In this way, the analogue die may have its required voltage and/or transistor gate oxide thickness whilst the digital part of the die can use a different voltage and/or transistor gate oxide thickness. It should be appreciated that in some embodiments, the digital die may predominantly contain digital circuitry and a relatively small amount of analogue circuitry and/or the analogue die may predominantly contain analogue circuitry and a relative small amount of digital circuitry.

Alternatively or additionally, each die may be designed to provide a particular function which may require various different mixes of analogue and digital circuitry in the implementation of that particular function. In some embodiments, this may mean that the same die or same design for a die may be used in different packages. By introducing this modularity, design time may be reduced.

In the following, a single package comprising two or more dies will be referred to as a system in package.

By way of example only, one system in package may comprise: a 32 nanometre die containing high speed CPUs (central processing units), one or more DDR3 controllers and other elements; and a 55 nanometre die containing analogue PHYs (physical layer devices). As the analogue circuitry is contained on a different die to that containing the digital circuitry, the 32 nanometre die is able to maximise the benefits from the reduction in size.

Some system in packages may be used for a set top box. For example, one die may comprise a set top box application die and another die a media processing engine. Alternatively one package could comprise an RF (radio frequency) die and a TV tuner die. Alternatively, a wireless networking PHY layer die may be incorporated in the same package as an RF die. Alternative embodiments may be used in a wide variety of different contexts. The following is a non exhaustive list of where some embodiments of the invention may be used: mobile phone chips; automotive products; telecoms products; wireless products; gaming application chips; personal computer chips; and memory chips.

Some embodiments of the invention may be used where there are two or more dies in a package. Embodiments of the invention may alternatively or additionally be used where it is advantageous for at least one of the dies to be certified, validated or tested independently for conformance to some standard. Embodiments of the invention may alternatively or additionally be used where one of the dies contains special-purpose logic to drive specific wireless, optical or electrical interfaces so that the other die(s) can be manufactured independently and not incur any cost associated with the special purpose logic. Embodiments of the invention may alternatively or additionally be used where one of the dies contains information (for example encryption information) which is to be withheld from the designers/manufacturers of the other dies. Embodiments of the invention may alternatively or additionally be used where one of the die contains high-density RAM or ROM and it is preferable to separate this from standard high speed logic for reasons of fabrication yield and/or product flexibility.

The above give some examples of different system in packages. However, it should be appreciated that alternative embodiments of the invention may be used for any system in package comprising two or more dies.

Whilst this detailed description has set forth some embodiments of the present invention, the appended claims cover other embodiments of the present invention which differ from the described embodiments according to various modifications and improvements. Other applications and configurations may be apparent to the person skilled in the art.

## Claims

1. A die comprising:
a controller configured to select at least one task to be performed on said die;
signal circuitry configured in response to the selection of said at least one task to provide a signal to be sent to a second die for initiating performance of said selected at least one task on said second die; and
task circuitry configured in response to said signal to cause said selected at least one task to be performed.

2. A die as claimed in claim 1, comprising;
a register comprising a plurality of entries, each entry corresponding to a task which is to be time coordinated with a task on a second die, said controller configured to set at least one entry of said register and to cause at least one corresponding entry in a register on the second die to be set.

3. A die as claimed in claim 2, wherein said signal circuitry is configured, in response to said at least one entry being set to provide said signal to be sent to said second die.

4. A die as claimed in claim 2 or 3, wherein each entry of said register comprises a bit.

5. A die as claimed in claim 4, wherein said controller is configured to set an entry by setting said bit to a logic value.

6. A die as claimed in claim 2, 3, 4 or 5, wherein said controller is configured to set a plurality of entries at the same time.

7. A die as claimed in any of claims 2 to 6, wherein said signal circuitry is configured to be connected to each entry of said register and is responsive to the setting of any one or more entries to generate said synchronisation signal.

8. A die as claimed in any of claims 2 to 7, wherein said signal circuitry and said task circuitry are configured to respond to said setting of said entry at substantially the same time.

9. A die as claimed in any preceding claim, wherein said controller is configured to cause said at least one corresponding entry in the register on the second die to be set before the at least one entry of said register is set.

10. A die comprising:
an input configured to receive a task selecting signal from a first die, selecting at least one task to be performed on said die;
an input configured to receive a task initiating signal from the first die; and
task circuitry configured in response to said at least one task being selected and receipt of said task initiating signal to cause said at least one task to be performed.

11. A die as claimed in claim 10, comprising:
a register comprising a plurality of entries, each entry corresponding to a task which is to be time coordinated with a task on a first die, said task selecting signal configured to set at least one entry of said register, said task circuitry being configured in response to said at least one entry being set and the receipt of the task initiating signal to cause said at least one task corresponding to said entry to be performed.

12. A die as claimed in claim 11, comprising control circuitry for said task circuitry, said control circuitry having an input to receive said task initiating signal and a respective entry of said register, said control circuitry being configured to generate a control signal, when said synchronisation signal has been received and said respective entry has been set, to cause said task circuitry to perform said task.

13. A die as claimed in any preceding claims, wherein said task circuitry comprises a plurality of task circuitry, each task circuitry being associated with one of said tasks.

14. A die as claimed in claim 13, wherein said each task circuitry is configured to receive the value of an associated entry for said task in a or said register

15. A package comprising a die as claimed in any of claims 1 to 9, 13 or 14, and a die as claimed in any of claims 10 to 14.
